# EUROPÄISCHE PATENTSCHRIFT

(11) **EP 4 338 932 B1**
(45) Veröffentlichungstag und Bekanntmachung des Hinweises auf die Patenterteilung: **09.12.2026**
(21) Anmeldenummer: 23188011.3
(22) Anmeldetag: 27.07.2023
(51) Int. Cl.: B29C 49/78, B29C 49/64, B29C 49/12

(54) **VORRICHTUNG UND VERFAHREN ZUR HERSTELLUNG VON BEHÄLTERN**
APPARATUS AND METHOD FOR MANUFACTURING CONTAINERS
APPAREIL ET PROCÉDÉ DE FABRICATION DE RÉCIPIENTS

(30) Priorität: 09.09.2022 DE 102022122969
(43) Veröffentlichungstag der Anmeldung: 20.03.2024
(73) Patentinhaber: Krones AG, 93073 Neutraubling (DE)
(72) Erfinder: STOPFER, Andreas, 93073 Neutraubling (DE); SENN, Konrad, 93073 Neutraubling (DE)
(74) Vertreter: Grünecker Patent- und Rechtsanwälte PartG mbB

(56) Entgegenhaltungen:
- EP-B1- 1 348 932
- WO-A1-2019/038441
- DE-A1- 102019 132 655
- FR-A1- 3 074 714
- US-A1- 2009 261 513

## Beschreibung

Die Erfindung betrifft eine Vorrichtung und ein Verfahren zum Herstellen von Behältern wie etwa von PET Behältern mit einem Streckblasverfahren.

Bekannt ist die Druckschrift EP 1 998 950, in der an dem Behälter eine Wanddickenmessung durchgeführt wird und damit die Heizeinrichtung der Vorformlinge geregelt wird.

Nachteilig ist hierbei, dass eine konkrete Wanddickenmessung durchgeführt werden muss, was bei einigen Behältergeometrien schwierig ist. Auch wird mit der ermittelten Wanddicke nur die eine zugeordnete Heizeinrichtung geregelt.

Die Druckschrift US 2009/261513 A1 offenbart eine Vorrichtung zur Herstellung von Behältern umfassend: eine Heizeinrichtung für Vorformlinge der Behälter, deren Heizwirkung einstellbar ist, eine Umformungseinrichtung mit einstellbaren Parametern, die den Umformungsvorgang beeinflussen, zum Umformen der Vorformlinge in Behälter, eine Messeinrichtung die ausgebildet ist, eine Transmissionsmessung für Licht, wie etwa Infrarotlicht, welches durch den Vorformling den Behälter hindurchtritt, auszuführen, eine Regelung, die ausgebildet ist, das Ergebnis der Transmissionsmessung und einen Sollwert der Transmissionsmessung zu verarbeiten und basierend auf dem Ergebnis der Transmissionsmessung und des Sollwerts die Heizwirkung der Heizeinrichtung einzustellen, wobei der Sollwert bestimmt ist aus einem historischen Messwert, der mit der Messeinrichtung vorher gewonnen wurde.

Aufgabe der vorliegenden Erfindung ist es, eine in der Praxis besser handhabbare Regelung für die Behälterherstellung anzugeben.

Diese Aufgabe wird gelöst durch die Vorrichtung und das Verfahren gemäß den nachfolgenden Ansprüchen.

An dem hergestellten Behälter wird eine Transmissionsmessung durchgeführt. Diese hat nicht die Maßgabe eine Wanddicke zu ermitteln, sondern die Menge und ggf. Beschaffenheit an Material im Lichtweg. Dies schließt zum einen bereits das Material von zwei Behälterwandungen ein und funktioniert zum anderen auch bei Behälterteilen, die schräg zum Weg der Transmissionsmessung verlaufen. Letzteres ergibt sich z.B. bei dem Schulterbereich einer Flasche, einem nicht genau im Lichtweg zentrierten Behälter oder bei einem Behälter mit einer Profilierung. Profilierungen sind Strukturen, wie Vertiefungen, oder Erhebungen in der Wandung des Behälters, die auf der Innenseite und/oder auf der Außenseite der Wandung vorgesehen sind, z.B. zu Dekorzwecken, oder der Kennzeichnung z.B. mit einem Namenszug.

Mit dem Ergebnis der Transmissionsmessung wird die Heizwirkung der Heizeinrichtung und/oder ein oder mehrere einstellbare Parameter der Umformungseinrichtung eingestellt.

Die Behälter können beispielsweise Flaschen, wie etwa PET-Flaschen sein.

Die Transmissionsmessung wird beispielsweise mit Licht, wie etwa mit Infrarot (IR) Licht durchgeführt. Dabei kann die Transmission bei zwei verschiedenen Wellenlängen (beide im Infrarotbereich) erfolgen, um Einflüsse von anderen Medien im Lichtweg, wie etwa Luftfeuchtigkeit zu eliminieren oder zu kompensieren. Eine Wellenlänge liegt bevorzugt im Bereich einer Absorption im zu untersuchenden Material, die höher ist, wie etwa mindestens 5- oder 10-mal höher, als die Absorption bei der anderen Wellenlänge. Dadurch kann recht zuverlässig die Menge an Material im Lichtweg detektiert werden.

Für die Selektion der Wellenlänge können optische Filter in den Lichtwegen zu zwei verschiedenen Detektoren vorgesehen sein und die zwei Lichtwege können mit einem Strahlteiler, der das Licht nach der Transmission durch den Behälter aufteilt, erhalten werden.

Es kann vorgesehen sein, dass die Messsignale der Detektoren für die beiden Wellenlängen der Regelung separat zur Verfügung gestellt werden, es kann aber auch vorgesehen sein, dass die Messsignale in einer der Regelung vorgeschalteten Messbrücke verarbeitet werden z.B. durch eine (gewichtete) Differenzbildung und das Differenzergebnis der Regelung zur Verfügung gestellt wird.

Bei der Regelung, für die beispielsweise keine definierte Wanddicke als Sollwert angegeben wird, kann als Sollwert eine historische Messung, die mit der Messeinrichtung aufgenommen wurde, verwendet werden. Dadurch entfällt die Notwendigkeit, eine Messeinrichtung auf die Bestimmung einer konkreten Wandstärke zu eichen. Dadurch, dass eine historische Messung verwendet wird, braucht auch keine Berücksichtigung von anderen Faktoren, die die Messung beeinflussen, stattfinden. Erfahrungsgemäß zeigt sich in der Praxis, dass z.B. Maschinenvibrationen, die konkrete Behälterform, Profilierungen des Behälters und anderes die Messung beeinflussen. Diese Faktoren sind durch die Verwendung einer historischen Messung bereits berücksichtigt. Die historische Messung kann z.B. gewonnen werden durch Herstellung und Vermessung eines Behälters mit der Messeinrichtung und der Entscheidung, die Messwerte dieses Behälters als Sollwerte für spätere Messungen mit der Messeinrichtung zu speichern.

Optional kann vorgesehen sein, dass die Messeinrichtung die Transmission an mehreren Stellen des Behälters ermittelt. Dazu kann zum Beispiel vorgesehen sein, dass der Behälter relativ zu der Messeinrichtung bewegt wird und während er relativ zu der Messeinrichtung bewegt wird, werden mehrere Transmissionsmessungen mit der Messeinrichtung durchgeführt und so mehrere Transmissionsmessungen an verschiedenen Stellen durchgeführt. Diese Transmissionsmessungen ermitteln die Transmission an verschiedenen Stellen, aber in etwa auf gleicher Höhe des Behälters, sofern der Behälter mit der Richtung seiner Höhe senkrecht zu der Bewegungsrichtung bewegt wird. Die Richtung der Höhe des Behälters kann z.B. vom einem Behälterboden zu der Öffnung des Behälters orientiert sein und/oder entlang einer Längsachse des Behälters.

Die Ergebnisse der Transmissionsmessung (für die jeweiligen Wellenlängen separat oder, wie oben beschrieben, bereits in der Messbrücke verarbeitet) werden zum Beispiel gemittelt. Dabei kann die Mittelung auch nur für einige der Messwerte vorgenommen werden, wie z.B. für diejenigen Messwerte, die möglichst dicht bei der Mitte des Behälters (Mitte in Transportrichtung) liegen. Es können z.B. nur zwei, drei, vier, fünf oder sechs der Messwerte, die in etwa in der gleichen Höhe gemessen wurden, gemittelt werden. Der so ermittelte Mittelwert, kann dann für die Regelung genutzt werden. Durch die Verwendung der Transmissionsmessung von mehreren Stellen, die in etwa in der gleichen Höhe des Behälters liegen, wird ein breiter Bereich des Behälters vermessen und die Messung wird unempfindlicher gegenüber kleineren Störungen. Statt einer Mittelung können die Werte auch nur addiert oder anderweitig zu einem Messergebnis zu verarbeiten.

Die Messeinrichtung kann auch so ausgebildet sein, dass sie eine Transmissionsmessung an mehreren Stellen des Behälters auf unterschiedlichen Höhen des Behälters durchführen kann. Dazu kann die Messeinrichtung mehrere Messsensoren aufweisen, die jeweils eine Transmissionsmessung an dem Behälter durchführen können. Die verschiedenen Messsensoren können eine gemeinsame (IR-) Lichtquelle aufweisen oder aber mehrere Messsensoren von einer von mehreren Gruppen von Messsensoren können eine gemeinsame (IR-)Lichtquelle aufweisen, wobei auch jeder Messsensor eine eigene (IR-)Lichtquelle aufweisen kann. Jeder Messsensor hat einen Detektor zum Detektieren des transmittierten Lichts, wobei der Detektor mehrere Subdetektoren aufweisen kann, die für verschiedene Wellenlängen des transmittierten Lichts empfindlich sind. Jeder Messsensor kann die Transmission für (IR-) Licht bei verschiedenen Wellenlängen, wie etwa bei zwei verschiedenen Wellenlängen, messen.

Die Messsensoren (alle oder einige) können beispielsweise in äquidistanten Abständen vorgesehen sein, wie etwa in Abständen zwischen 0,5 und 3 cm, beispielsweise 1 cm. Dadurch kann ein möglichst vollständiges Bild der Transmission des Behälters erhalten werden und dies unabhängig von der konkreten Länge oder Form des Behälters. Eine solche Messeinrichtung mit einer Mehrzahl von Messsensoren kann ohne mechanische Umbauten für verschiedene Sorten von Behältern verwendet werden, wie z.B. für Behältersorten mit verschieden langen Behälterformen.

Die Regelung kann die Heizwirkung der Heizeinrichtung einstellen. Das kann z.B. dadurch geschehen, dass die Leistung oder die Temperatur der Heizeinrichtung von der Regelung vorgegeben wird. Zur Einstellung der Temperatur kann ein innerer Regelkreis vorgesehen sein, der die Einstellung der von der Regelung vorgegebenen Temperatur leistet.

Die Vorrichtung kann mehrere Heizeinrichtungen aufweisen, deren Heizwirkung von der Regelung eingestellt werden kann (wie oben erläutert durch Vorgeben der Temperatur der Heizeinrichtung oder der Heizleistung). Die Regelung kann dabei beispielsweise die Heizwirkung von mehreren oder von allen Heizeinrichtungen einstellen. Dazu kann die Regelung auf alle von der Messeinrichtung zur Verfügung gestellten Daten zurückgreifen. Dabei können auch die Transmissionsmesswerte von allen oder von mehreren der Messsensoren genutzt und von der Regelung verarbeitet werden.

Dadurch kann eine bessere Regelung der Heizeinrichtungen erreicht werden, da die Materialmenge und Beschaffenheit des Materials in den Messwegen von mehreren Messsensoren für die Regelung berücksichtigt werden können.

Es können beispielsweise mehr Messsensoren als Heizeinrichtungen vorgesehen sein. Dadurch kann die Information von mehreren Messsensoren zum Einstellen der Heizwirkung von einem oder mehreren der Heizeinrichtungen verwendet werden.

Auch können neben oder statt der Heizwirkung der Heizeinrichtung(en) auch ein oder mehrere einstellbare Parameter der Umformungseinrichtung mit der Regelung eingestellt werden. Das betrifft bei einer Streckblasmaschine, als Beispiel einer Umformungseinrichtung, zum Beispiel den Moment zu dem ein bestimmter Druck (wie etwa einer oder mehrere von Vordruck, Zwischendruck, Enddruck) angelegt werden und/oder die Höhe des jeweiligen Drucks. Die Regelung kann beispielsweise den Zeitpunkt des Reckvorgangs und die Geschwindigkeit des Reckvorgangs (wie etwa die Geschwindigkeit der Reckstange) auch oder unabhängig von der Einstellung eines Drucks einstellen.

Anhand der beigefügten Figuren sollen beispielhafte Ausführungsformen der Vorrichtung und des Verfahrens dargestellt werden. Dabei zeigt:
Fig. 1: einen Vorformling mit mehreren Heizeinrichtungen
Fig. 2: einen Behälter in einer Messeinrichtung
Fig. 3: eine weitere Darstellung eines Behälter in einer Messeinrichtung und
Fig. 4: eine schematische Skizze der Vorrichtung.

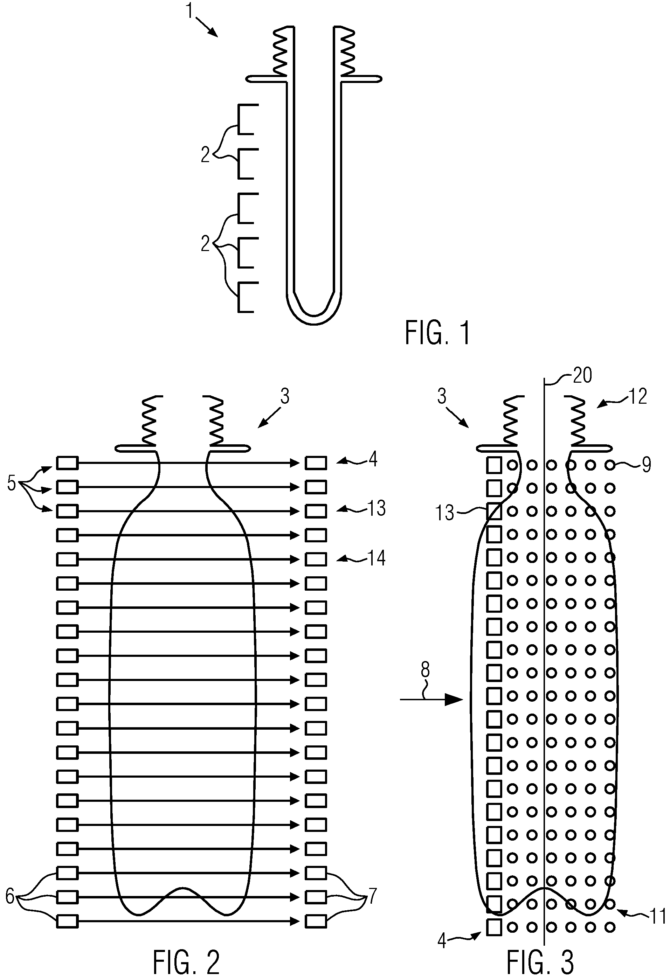

Fig. 1 zeigt einen Vorformling 1, der sich in einer Heizstation vor fünf Heizeinrichtungen 2 befindet. Die fünf Heizeinrichtungen 2 sind vertikal übereinander angeordnet. Statt fünf können auch mehr oder weniger Heizeinrichtungen 2 vorgesehen sein. Es kann auch sein, dass von mehreren Heizeinrichtungen 2 nicht alle zum Heizen eines Vorformlings genutzt werden, da der Vorformling nicht so lang ist, dass es sich vor allen Heizeinrichtungen 2 befindet. Die Regelung würde dann auch nur die genutzten Heizeinrichtungen 2 regeln.

Die Heizeinrichtungen 2 können Infrarotstrahler oder Heizstrahler oder Mikrowellenstrahler sein oder umfassen. Die Temperatur oder Heizleistung der Heizeinrichtungen 2 ist einstellbar. Dadurch können -bei mehreren Heizeinrichtungen 2-diese verschiedene Bereiche des Vorformlings 1 verschieden stark erhitzen. Auf die für eine Verformung nötige Temperatur wird üblicherweise nur der Bauchbereich oder röhrenförmige Bereich des Vorformlings 1 erhitzt (in Fig. 1 unten bzw. unterhalb des Kragens dargestellt), nicht ein Kragen und Gewindebereich, die in Fig. 1 am oberen Ende des Formformlings dargestellt sind. Je nachdem wie stark ein Bereich des zu verformenden Teils des Vorformlings erhitzt ist, wird sich bei dem Umformungsprozess eine Form des Behälters ergeben, der bei der Transmissionsmessung ein anderes Ergebnis liefert. Die Temperatur wird einen Einfluss auf die Materialmenge im Lichtweg der Transmissionsmessung haben, ebenso wie auf die Beschaffenheit der Materials. Bei PET kann dies z.B. der Grad der Kristallinität sein, die Orientierung der Molekülketten oder der Feuchtigkeitsgehalt, welches alles einen Einfluss auf die Transmissionsmessung haben kann.

Fig. 2 zeigt einen Behälter 3, der sich in einer Messeinrichtung 4 befindet. In der Messeinrichtung 4 sind hier beispielhaft zwanzig Messsensoren 5 vorgesehen. Es können auch mehr oder weniger Messsensoren 5 vorgesehen sein. Der unterste Messsensor 5 kann nicht genutzt werden, da der Behälter 3 zu kurz ist, um in dem Bereich des untersten Messsensors 5 zu gelangen. Die mehreren Messsensoren 5 weisen jeweils eine Lichtquelle 6 auf, die IR-Licht entlang eines Messweges aussenden können. Jede Lichtquelle 6 kann gepulst betrieben werden und einzelne Lichtpulse aussenden. Sie kann auch kontinuierlich Licht aussenden. Statt mehreren Lichtquellen 6 kann auch nur eine gemeinsame Lichtquelle vorgesehen sein. Es können auch für jeweils eine von mehreren Gruppen von mehrere Detektoren 7 eine gemeinsame Lichtquelle vorgesehen sein, die kontinuierlich oder gepulst betrieben werden.

Jeder Detektor 7, der eine Transmissionsmessung des Behälters durchführt, detektiert das Licht, das durch den Behälter transmittiert wurde, wobei das Licht durch zwei Wandungen des Behälters 3 tritt, bevor es von dem Detektor 7 detektiert wird.

Jeder Detektor 7 kann das transmittierte Licht in zwei oder mehr Lichtstrahlen aufteilen. In jedem der aufgeteilten Strahlengänge kann sich ein Filter befinden, so dass die Filter Licht mit verschiedenen Wellenlängen durchlassen. Im Strahlengang hinter den Filtern können sich Fotodetektoren befinden, die die Lichtintensität messen können. Die Signale der Fotodetektoren eines Messsensors, können in einer Messbrücke, so geschaltet werden, dass bei keinem Material eines Behälters im Lichtweg, die Signale sich so aufheben, dass als Messergebnis in etwa Null ausgegeben wird, wohingegen bei vorhandenem Material ein von Null verschiedenes Messergebnis ausgegeben wird.

Die Messsensoren 5 können, wie in Fig. 2 gezeigt, äquidistant vorgesehen sein. Die Messsensoren können einen Lichtweg in einer Richtung senkrecht zur Längsachse des Behälters 3 aufweisen. Die Messsensoren 5 können vertikal übereinander angeordnet sein. Wenn der Behälter 3 senkrecht steht oder hängt, dann kann der Lichtweg horizontal vorgesehen sein. Die Lichtwege von mehreren Messsensoren 5 können jeweils parallel zueinander vorgesehen sein und/oder gleich lang sein.

Die Signale bzw. das Signal jeden Messsensors 5 wird/werden der Regelung einzeln zur Verfügung gestellt. Der Regelung können auch die Signale jeden Detektors einzeln zur Verfügung gestellt werden.

Wie in Fig. 3 gezeigt, können Behälter mit einem Transporteur hängend oder stehend durch eine Messeinrichtung transportiert werden. Die Bewegung ist durch den Pfeil 8 in der Figur 3 dargestellt. Dabei können mehrere Transmissionsmessungen in gleicher Höhe an einem Behälter 3 durchgeführt werden. Dazu werden bei Bewegung des Behälters 3 durch die Messeinrichtung 4 nacheinander mehrere Transmissionsmessungen vorgenommen, die dann durch die Bewegung an verschiedenen Stellen des Behälters 3 vorgenommen werden.

In Figur 3 sind die Messsensoren und der Behälter in einer Blickrichtung senkrecht zu der von Figur 2 dargestellt. Die Blickrichtung ist parallel zu der Richtung des Lichtwegs der Messsensoren (senkrecht zur Zeichenebene).

Die Stellen, an denen die Messsensoren beispielsweise die Transmission des Behälters gemessen haben können, sind mit kleinen runden Kreisen 9 markiert. Dort könnte die Transmission gemessen worden sein, bevor der Behälter in Bewegungsrichtung gemäß Pfeil 8 in die Position gebracht wurde, in der er in Fig. 3 dargestellt ist.

Die Kreise, die in Fig. 3 horizontal nebeneinander dargestellt sind, stellen Transmissionsmessungen dar, die in etwa in gleicher Höhe an dem Behälter durchgeführt worden sein können. Die Kreise, die in Fig. 3 übereinander dargestellt sind, entsprechen Transmissionsmessungen, die an verschiedenen Höhen des Behälters durchgeführt wurden.

Von den Transmissionsmessungen, die in Fig. 3 etwa in der gleichen Höhe dargestellt sind, können nur einige weiter verarbeitet werden etwa für eine Mittelwertbildung. Optional werden nur diejenigen zwei, drei oder vier oder mehr Transmissionsmessungen in etwa in der gleichen Höhe des Behälters, die möglichst dicht bei der Längsachse 10 des Behälters liegen, weiterverarbeitet, wie etwa für eine Mittelwertbildung. Z.B. können nur die eine oder zwei Transmissionsmessung an der Stelle jeweils gerade rechts oder links der Längsachse 10 weiterverarbeitet werden, wie etwa für eine Mittelwertbildung.

Die Richtung der Höhe verläuft in Fig. 3 entlang der Längsachse 10 des Behälters. Sie kann auch alternative entlang der Richtung vom Boden 11 des Behälters 3 zu dessen Öffnung 12 führen. In Fig. 3 ist das die gleiche Richtung wie die der Längsachse 10.

Der in Fig. 2 und 3 mit dem Bezugszeichen 13 gekennzeichnete Messsensor misst die Transmission des Behälters im Bereich der Schulter des Behälters. Hier verläuft, wie gut in Fig. 2 zu erkennen, die Wandung des Behälters 3 schräg zu dem Lichtweg der Transmissionsmessung. Dadurch wird die Transmissionsmessung mehr Material detektieren als bei der Transmissionsmessung des Messsensors 14, die z.B. zwei oder drei Messsensoren weiter unten durchgeführt wird. Somit liefert der Messsensor 13 und 14 bei gleicher Wandstärke des Behälters an der Stelle der Messung des Messsensors 13 und 14 verschiedenen Werte für die Transmission bzw. für die Menge an Material im Lichtweg. Dies ist jedoch nicht hinderlich, da der Sollwert der Regelung z.B. ein historischer Wert der Transmissionsmessung, ebenfalls diesen Unterschied gemessen hat. Durch eine Regelung auf einen historischen Messwert und nicht auf eine vorgegebene Wandstärke ist die Vorrichtung für verschiedene Behältertypen -formen, und -größen einsetzbar, ohne dass es mechanischer Umbauten des Messeinrichtung bedürfte.

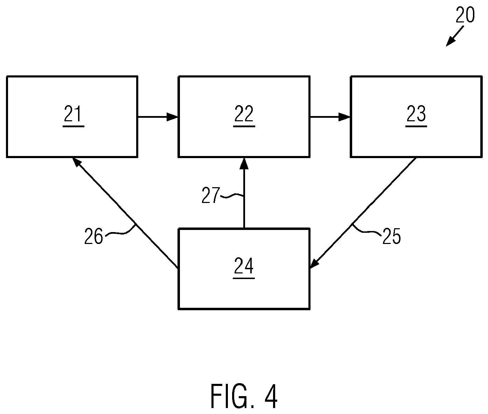

In Fig. 4 ist schematische eine Vorrichtung 20 dargestellt. Die Vorrichtung umfasst eine oder mehrere Heizeinrichtung(en) 21, eine Umformungseinrichtung 22, eine Messeinrichtung 23 und eine Regelung 24. Die Daten der Messeinrichtung 23 werden, wie oben und unten beschrieben, der Regelung 24 zur Verfügung gestellt (siehe Pfeil 25). Die Regelung 24 kann damit die Heizwirkung der Heizeinrichtung 23 einstellen (siehe Pfeil 26). Auch oder statt der Regelung der Heizeinrichtung kann die Regelung 24 einstellbare Parameter der Umformungseinrichtung 22 einstellen. Das kann zum Beispiel der Zeitpunkt des Anlegens eines Vordrucks, und/oder eines Zwischendrucks und/oder eines Enddrucks bei einem Streckblasvorgang sein. Auch der Zeitpunkt des Reckvorgangs und/oder die Geschwindigkeit einer Reckstange für den Reckvorgang können von der Regelung eingestellt werden.

Die Regelung stellt die Heizwirkung der Heizeinrichtung(en) und/oder den oder die Parameter der Umformeinrichtung so ein, dass die Ergebnisse der Transmissionsmessung (Ist-Werte) möglichst dicht bei vorgegebenen (Soll-)Werten der Transmissionsmessung liegen.

Das Ergebnis der Transmissionsmessung wird zu einem signifikanten Teil von der Menge an Material des Behälters im Lichtweg der Transmissionsmessung bestimmt. Diese Menge an Material, kann durch die Heizwirkung, gerade bei mehreren Heizeinrichtungen gezielt beeinflusst werden, ebenso wie durch einstellbare Parameter der Umformungseinrichtung.

Es kann vorgesehen sein, dass die Umformungseinrichtung mehrere Formen zum Formen von Behältern aufweist, wobei jede Form für sich alleine ausgebildet ist, Vorformlinge in Behälter umzuformen. Die Regelung kann so ausgebildet sein, dass das Ergebnis/die Ergebnisse der Transmissionsmessung von einem Behälter einer der mehreren Formen zugeordnet wird. Dann kann die Regelung mehrere Ergebnisse von Transmissionsmessungen von verschiedenen Behältern, die der selben Form zugeordnet wurden, mitteln. Dabei können z.B. die Ergebnisse der Transmissionsmessungen von mehr oder weniger als 5 oder mehr oder weniger als 10 Behältern, die aus der gleichen Form zugeordnet wurden, gemittelt werden. Die so gemittelten Werte, werden dann für die Regelung der Heizeinrichtung und/oder der einstellbaren Parameter der Umformungseinrichtung genutzt. Dadurch werden die Einstellungen durch die Regelung unabhängiger von einzelnen Behältern und erfassen zuverlässiger systematische Probleme oder Fehleinstellungen der Regelung.

Die Regelung kann z.B. in Form eines neuralen Netzes oder einer Artificial Intelligence (AI) ausgebildet sein, die zahlreiche Messwerte oder Messergebnisse der Messsensoren zu wenigen Ausgabenwerte verarbeitet, wobei weniger Ausgabewerte als Messwerte genutzt werden.

## Patentansprüche

1. Vorrichtung (20) zur Herstellung von Behältern (3) umfassend:
eine Heizeinrichtung (2, 21) für Vorformlinge (1) der Behälter (3), deren Heizwirkung einstellbar ist,
eine Umformungseinrichtung (22) mit einstellbaren Parametern, die den Umformungsvorgang beeinflussen, wie etwa eine Streckblaseinrichtung zum Umformen der Vorformlinge in Behälter,
eine Messeinrichtung (23), die ausgebildet ist, eine Transmissionsmessung für Licht, wie etwa Infrarotlicht, welches durch den Behälter (3) hindurchtritt, auszuführen,
eine Regelung (24), die ausgebildet ist, das Ergebnis der Transmissionsmessung und einen Sollwert der Transmissionsmessung zu verarbeiten und basierend auf dem Ergebnis der Transmissionsmessung und des Sollwerts
- die Heizwirkung der Heizeinrichtung (21) und/oder
- ein oder mehrere einstellbare Parameter der Umformungseinrichtung
einzustellen, wobei der Sollwert bestimmt ist aus einem historischen Messwert, der mit der Messeinrichtung vorher gewonnen wurde.

2. Vorrichtung nach Anspruch 1, wobei die Transmissionsmessung mit Licht, wie etwa Infrarotlicht, bei zwei verschiedenen Wellenlängen vorgesehen ist.

3. Vorrichtung nach Anspruch 2, wobei der Regelung (24) das Ergebnis der Transmissionsmessung für das Licht der beiden verschiedenen Wellenlängen einzeln zur Verfügung gestellt werden kann oder das Ergebnis der Transmissionsmessung für das Licht der beiden verschiedenen Wellenlängen erst zu einem Wert, wie z.B. einem Differenzwert oder einen Quotienten, verrechnet werden kann und anschließend der Regelung als ein Messwert zur Verfügung gestellt werden kann.

4. Vorrichtung nach einem der Ansprüche 1 bis 3, wobei die Messeinrichtung (23) vorgesehen ist, die Transmissionsmessung an einem Behälter (3) mehrfach an verschiedenen Stellen des Behälters in in etwa gleicher Höhe des Behälters durchzuführen und die Ergebnisse zu mitteln, addieren oder anderweitig zu einem einzelnen Messergebnis zu verarbeiten und das so erlangte Messergebnis für die Regelung (24) zur Verfügung zu stellen.

5. Vorrichtung nach einem der Ansprüche 1 bis 4, wobei die Messeinrichtung mehrere Messsensoren (5) aufweist, die Transmissionsmessungen an einem Behälter (3) an verschiedenen Stellen des Behälters in verschiedenen Höhen des Behälters durchführen können und die Ergebnisse der Messsensoren einzeln der Regelung (24) zur Verfügung gestellt werden können.

6. Vorrichtung nach einem der Ansprüche 1 bis 5, wobei die Messeinrichtung (23) so ausgebildet ist, dass das Licht zwischen der Beleuchtung und einem Empfänger des Lichts durch zwei Wandungen des Behälters (3) tritt.

7. Vorrichtung nach einem der Ansprüche 1 bis 6, wobei die Regelung dazu ausgebildet ist, einen Messwert der Transmissionsmessung als Sollwert für zukünftige Messungen zu speichern.

8. Vorrichtung nach einem der Ansprüche 1 bis 7, wobei mehrere Heizeinrichtungen (21, 2) vorgesehen sind, deren Heizwirkung einstellbar ist, die verschiedenen Bereiche entlang einer Längsachse des Vorformlings (1) heizen können und wobei die Messeinrichtung mehrere Messsensoren (5) aufweist, die entlang der Längsachse (10) des Behälters (3) an verschiedenen Stellen eine Transmissionsmessung für Licht, wie etwa Infrarotlicht, welches durch den Behälter (3) hindurchtritt, ausführen können, wobei die Regelung die Heizwirkung der mehreren Heizeinrichtungen (2, 21) basierend auf den mehreren Messsensoren (5) regeln kann, wobei beispielsweise mehr Messsensoren (5) als Heizeinrichtungen (21, 2) vorgesehen sind, wie etwa mehr als doppelt oder mehr als dreimal so viele.

9. Verfahren zum Herstellen von Behältern mit den Schritten:
Aufheizen eines Vorformlings (1) mit einer Heizeinrichtung (2, 21) durch dessen Heizwirkung,
Umformen des Vorformlings (1) in einen Behälter (3) wie etwa in einem Streckblasprozess, Durchführen einer Transmissionsmessung für Licht an dem Behälter mit einer Messeinrichtung, und
Regeln (25, 26) der Heizwirkung der Heizeinrichtung anhand des Ergebnisses der Transmissionsmessung und anhand eines historischen Messwerts der Transmissionsmessung, der mit der Messeinrichtung gewonnen wurde.

10. Verfahren nach Anspruch 9, wobei eine Transmissionsmessung mit der Messeinrichtung (23) an einem Behälter (3) durchgeführt wird und das Ergebnis der Transmissionsmessung als historischer Messwert der Transmissionsmessung in der Regelung (24) abgespeichert wird.

11. Verfahren nach einem der Ansprüche 9 oder 10, wobei mehrere Transmissionsmessungen an einem Behälter (3) in etwa in gleicher Höhe an dem Behälter durchgeführt werden und die Ergebnisse gemittelt, addiert oder anderweitig zu einem einzelnen Messergebnis verarbeitet werden und das so erlangte Messergebnis für die Regelung zur Verfügung gestellt wird.

12. Verfahren nach einem der Ansprüche 9 bis 11, wobei mehrere Transmissionsmessungen an einem Behälter in an verschiedenen Stellen des Behälters in verschiedenen Höhen des Behälters durchgeführt werden und die Ergebnisse einzeln der Regelung zur Verfügung gestellt werden.

13. Verfahren nach einem der Ansprüche 9 bis 12, wobei mehrere Heizeinrichtungen (2) vorgesehen sind, deren Heizwirkung einstellbar ist, die verschiedenen Bereiche entlang einer Längsachse des Vorformlings heizen und wobei die Messeinrichtung mehrere Messsensoren (5) aufweist, die entlang der Längsachse (10) des Behälters (3) an verschiedenen Stellen eine Transmissionsmessung für Licht, wie etwa Infrarotlicht, welches durch den Behälter (3) hindurchtritt, ausführen, wobei die Regelung die Heizwirkung der mehreren Heizeinrichtungen (2) basierend auf den mehreren Messsensoren (5) regelt, wobei beispielsweise mehr Messsensoren (5) als Heizeinrichtungen vorgesehen sind, wie etwa mehr als doppelt oder mehr als dreimal so viele.

14. Verfahren nach einem der Ansprüche 9 bis 13, wobei die Regelung basierend auf dem Ergebnis der Transmissionsmessung neben der Heizwirkung der Heizeinrichtung auch weitere den Schritt des Umformens relevante Parameter wie etwa einen Blasdruck oder Blaszeitpunkt regelt.

## Claims

1. Apparatus (20) for manufacturing containers (3), comprising:
a heating device (2, 21) for preforms (1) of the containers (3), the heating effect of which is adjustable,
a forming device (22) having adjustable parameters, which influences the forming process, such as a stretch blow-moulding device for forming the preforms into containers,
a measuring device (23), which is configured to perform a transmission measurement for light, such as infrared light, which passes through the container (3),
a control (24), which is configured to process the result of the transmission measurement and a setpoint of the transmission measurement and, based on the result of the transmission measurement and the setpoint,
to adjust the heating effect of the heating device (21) and/or
to adjust one or more adjustable parameters of the forming device,
wherein the setpoint is determined from a historical measured value previously obtained using the measuring device.

2. Apparatus according to claim 1, wherein the transmission measurement is provided with light, such as infrared light, at two different wavelengths.

3. Apparatus according to claim 2, wherein the control (24), as a result of the transmission measurement for the light at the two different wavelengths, can provide an averaged measured value for the control from the results of the transmission measurement for the light at the two different wavelengths, such as a difference value or a quotient, and subsequently.

4. Apparatus according to any one of claims 1 to 3, wherein the measuring device (23) is configured to perform the transmission measurements on a container (3) multiple times at different positions of the container at approximately the same height and to process the results into an averaged or otherwise combined measurement result and to provide the measurement result thus obtained to the control (24).

5. Apparatus according to any one of claims 1 to 4, wherein the measuring device can perform multiple measurements (5) at different measuring positions on a container (3) at different positions of the container at different heights and can provide the results of the measuring sensors individually to the control (24).

6. Apparatus according to any one of claims 1 to 5, wherein the measuring device (23) is configured such that the light passes through the illumination and a receiver of the light through two walls of the container (3).

7. Apparatus according to any one of claims 1 to 6, wherein the control is configured to store a measured value of the transmission measurement as a setpoint for future measurements.

8. Apparatus according to any one of claims 1 to 7, wherein a plurality of heating devices (21, 2) are provided, the heating effect of which is adjustable, which can heat different regions along a longitudinal axis of the preform (1), and wherein the measuring device comprises a plurality of measuring sensors (5) which are arranged along the longitudinal axis (10) of the container (3) at different positions and can perform a transmission measurement for light, which passes through the container (3), wherein the control can control the heating effect of the plurality of heating devices (2, 21) based on the plurality of measuring sensors (5), wherein, for example, more measuring sensors (5) than heating devices (21, 2) are provided, such as more than twice or more than three times as many.

9. Method for manufacturing containers (3), comprising the steps of:
heating a preform (1) using a heating device (2, 21) by the heating effect thereof,
forming the preform (1) into a container (3), such as in a stretch blow-moulding process,
performing a transmission measurement for light on the container using a measuring device, and
controlling (25, 26) the heating effect of the heating device on the basis of the result of the transmission measurement and on the basis of a historical measured value of the transmission measurement obtained using the measuring device.

10. Method according to claim 9, wherein a transmission measurement is performed on a container (3) using the measuring device (23) and the result of the transmission measurement is stored in the control (24) as a historical measured value of the transmission measurement.

11. Method according to any one of claims 9 or 10, wherein a plurality of transmission measurements are performed on a container (3) at approximately the same height on the container and the results are averaged, added or otherwise processed into an averaged measured value and the measurement result thus obtained is provided to the control.

12. Method according to any one of claims 9 to 11, wherein a plurality of transmission measurements are performed on a container at different positions of the container at different heights and the results are provided individually to the control.

13. Method according to any one of claims 9 to 12, wherein a plurality of heating devices (2) are provided, the heating effect of which is adjustable, which heat different regions along a longitudinal axis of the preform, and wherein the measuring device comprises a plurality of measuring sensors (5), which are arranged along the longitudinal axis (10) of the container (3) at different positions and perform a transmission measurement for light, such as infrared light, which passes through the container (3), wherein the control controls the heating effect of the plurality of heating devices (2) based on the plurality of measuring sensors (5), wherein, for example, more measuring sensors (5) than heating devices are provided, such as more than twice or more than three times as many.

14. Method according to any one of claims 9 to 13, wherein the control, based on the result of the transmission measurements, in addition to the heating effect of the heating device, also controls further parameters relevant to the step of forming, such as a blowing pressure or blowing time.

## Revendications

1. Appareil (20) de fabrication de récipients (3), comprenant :
un dispositif de chauffage (2, 21) pour des préformes (1) des récipients (3), dont l'effet de chauffage est réglable,
un dispositif de formage (22) présentant des paramètres réglables, qui influence le processus de formage, tel qu'un dispositif d'étirage-soufflage pour le formage des préformes en récipients,
un dispositif de mesure (23), qui est conçu pour effectuer une mesure de transmission pour de la lumière, telle que de la lumière infrarouge, qui traverse le récipient (3),
une commande (24), qui est conçue pour traiter le résultat de la mesure de transmission et une valeur de consigne de la mesure de transmission et, sur la base du résultat de la mesure de transmission et de la valeur de consigne,
régler l'effet de chauffage du dispositif de chauffage (21) et/ou
régler un ou plusieurs paramètres réglables du dispositif de formage,
la valeur de consigne étant déterminée à partir d'une valeur mesurée historique préalablement obtenue avec le dispositif de mesure.

2. Appareil selon la revendication 1, dans lequel la mesure de transmission est prévue avec de la lumière, telle que de la lumière infrarouge, à deux longueurs d'onde différentes.

3. Appareil selon la revendication 2, dans lequel la commande (24), en tant que résultat de la mesure de transmission pour la lumière aux deux longueurs d'onde différentes, peut fournir, à partir des résultats de la mesure de transmission pour la lumière aux deux longueurs d'onde différentes, une valeur mesurée moyennée pour la commande, telle qu'une valeur de différence ou un quotient, et ensuite.

4. Appareil selon l'une quelconque des revendications 1 à 3, dans lequel le dispositif de mesure (23) est conçu pour effectuer plusieurs fois les mesures de transmission sur un récipient (3), en différentes positions du récipient à approximativement la même hauteur, et pour traiter les résultats en un résultat de mesure moyenné ou autrement combiné et fournir à la commande (24) le résultat de mesure ainsi obtenu.

5. Appareil selon l'une quelconque des revendications 1 à 4, dans lequel le dispositif de mesure peut effectuer plusieurs mesures (5) en différentes positions de mesure sur un récipient (3), en différentes positions du récipient à différentes hauteurs, et peut fournir individuellement à la commande (24) les résultats des capteurs de mesure.

6. Appareil selon l'une quelconque des revendications 1 à 5, dans lequel le dispositif de mesure (23) est conçu de telle sorte que la lumière traverse, entre l'éclairage et un récepteur de la lumière, deux parois du récipient (3).

7. Appareil selon l'une quelconque des revendications 1 à 6, dans lequel la commande est conçue pour mémoriser une valeur mesurée de la mesure de transmission en tant que valeur de consigne pour des mesures futures.

8. Appareil selon l'une quelconque des revendications 1 à 7, dans lequel plusieurs dispositifs de chauffage (21, 2) sont prévus, dont l'effet de chauffage est réglable, lesquels peuvent chauffer différentes zones le long d'un axe longitudinal de la préforme (1), et dans lequel le dispositif de mesure comprend plusieurs capteurs de mesure (5), qui sont disposés en différentes positions le long de l'axe longitudinal (10) du récipient (3) et peuvent effectuer une mesure de transmission pour de la lumière qui traverse le récipient (3), la commande pouvant commander l'effet de chauffage des plusieurs dispositifs de chauffage (2, 21) sur la base des plusieurs capteurs de mesure (5), par exemple plus de capteurs de mesure (5) que de dispositifs de chauffage (21, 2) étant prévus, par exemple plus de deux fois ou plus de trois fois plus.

9. Procédé de fabrication de récipients (3), comprenant les étapes consistant à :
chauffer une préforme (1) au moyen d'un dispositif de chauffage (2, 21) par son effet de chauffage,
former la préforme (1) en un récipient (3), par exemple dans un processus d'étirage-soufflage,
effectuer une mesure de transmission pour de la lumière sur le récipient au moyen d'un dispositif de mesure, et
commander (25, 26) l'effet de chauffage du dispositif de chauffage sur la base du résultat de la mesure de transmission et sur la base d'une valeur mesurée historique de la mesure de transmission obtenue avec le dispositif de mesure.

10. Procédé selon la revendication 9, dans lequel une mesure de transmission est effectuée sur un récipient (3) avec le dispositif de mesure (23) et le résultat de la mesure de transmission est mémorisé dans la commande (24) en tant que valeur mesurée historique de la mesure de transmission.

11. Procédé selon l'une quelconque des revendications 9 ou 10, dans lequel plusieurs mesures de transmission sont effectuées sur un récipient (3) à approximativement la même hauteur sur le récipient et les résultats sont moyennés, additionnés ou autrement traités en une valeur mesurée moyennée et le résultat de mesure ainsi obtenu est fourni à la commande.

12. Procédé selon l'une quelconque des revendications 9 à 11, dans lequel plusieurs mesures de transmission sont effectuées sur un récipient en différentes positions du récipient à différentes hauteurs et les résultats sont fournis individuellement à la commande.

13. Procédé selon l'une quelconque des revendications 9 à 12, dans lequel plusieurs dispositifs de chauffage (2) sont prévus, dont l'effet de chauffage est réglable, lesquels chauffent différentes zones le long d'un axe longitudinal de la préforme, et dans lequel le dispositif de mesure comprend plusieurs capteurs de mesure (5), qui sont disposés en différentes positions le long de l'axe longitudinal (10) du récipient (3) et effectuent une mesure de transmission pour de la lumière, telle que de la lumière infrarouge, qui traverse le récipient (3), la commande commandant l'effet de chauffage des plusieurs dispositifs de chauffage (2) sur la base des plusieurs capteurs de mesure (5), par exemple plus de capteurs de mesure (5) que de dispositifs de chauffage étant prévus, par exemple plus de deux fois ou plus de trois fois plus.

14. Procédé selon l'une quelconque des revendications 9 à 13, dans lequel la commande, sur la base du résultat des mesures de transmission, commande, outre l'effet de chauffage du dispositif de chauffage, également d'autres paramètres pertinents pour l'étape de formage, tels qu'une pression de soufflage ou un instant de soufflage.
